# FASCICULE DE BREVET EUROPEEN

(11) **EP 1 817 776 B1**
(45) Date de publication et mention de la délivrance du brevet: **30.10.2013**
(21) Numéro de dépôt: 05822965.9
(22) Date de dépôt: 30.11.2005
(51) Int. Cl.: G21C 3/334, B23K 37/02

(54) **INSTALLATION DE SOUDAGE DE SQUELETTES D'ASSEMBLAGES DE COMBUSTIBLE NUCLEAIRE, PROCEDE DE PROGRAMMATION, PROCEDES DE SOUDAGE DE SQUELETTE ET DE REALISATION D'ASSEMBLAGE CORRESPONDANTS**
ANLAGE ZUM ZUSAMMENSCHWEISSEN VON SKELETTEN FÜR KERNBRENNSTABBÜNDEL, VERFAHREN ZU DEREN PROGRAMMIERUNG, VERFAHREN ZUM ZUSAMMENSCHWEISSEN VON SKELETTEN UND ZUR FERTIGUNG VON MIT DENSELBEN AUSGERÜSTETEN KERNBRENNSTABBÜNDELN
INSTALLATION FOR WELDING FRAMEWORKS OF NUCLEAR FUEL ASSEMBLIES, PROGRAMMING METHOD, CORESPONDING METHODS FOR FRAMEWORK WELDING AND ASSEMBLING

(30) Priorité: 30.11.2004 FR 0412707
(43) Date de publication de la demande: 15.08.2007
(73) Titulaire: AREVA NP, 92400 Courbevoie (FR)
(72) Inventeur: TAILLANDIER, Thierry, F-26750 ST PAUL LES ROMANS (FR)
(74) Mandataire: Domenego, Bertrand
(86) Numéro de dépôt international: PCT/FR2005/002984
(87) Numéro de publication internationale: WO 2006/059004

(56) Documents cités:
- EP-A- 0 105 779
- FR-A- 2 623 648
- FR-A- 2 627 077
- FR-A- 2 670 947
- FR-A- 2 691 825
- GB-A- 1 511 608
- PATENT ABSTRACTS OF JAPAN vol. 1997, no. 05, 30 mai 1997 (1997-05-30) & JP 09 001331 A (HITACHI LTD), 7 janvier 1997 (1997-01-07)
- PATENT ABSTRACTS OF JAPAN vol. 1997, no. 01, 31 janvier 1997 (1997-01-31) & JP 08 238571 A (HITACHI LTD), 17 septembre 1996 (1996-09-17)
- DATABASE WPI Section Ch, Week 199117 Derwent Publications Ltd., London, GB; Class M23, AN 1991-123341 XP002339909 & SU 1 053 399 A (VOLKOV A I) 15 août 1990 (1990-08-15)
- DATABASE WPI Section PQ, Week 197926 Derwent Publications Ltd., London, GB; Class P62, AN 1979-F6413B XP002339910 & SU 621 571 A (KIEV AUTOM INST) 3 août 1978 (1978-08-03)

## Description

La présente invention concerne une installation de soudage d'éléments de structure sur des tubes guides d'un squelette d'assemblage de combustible nucléaire, l'installation comprenant :
- au moins un bâti de réception et de maintien des tubes guides et des éléments de structure,
- un chariot déplaçable parallèlement aux tubes guides,
- au moins un outil de soudage, et
- des moyens de déplacement de l'outil de soudage, les moyens de déplacement reliant la pince au chariot.

L'invention s'applique en particulier au soudage de grilles de maintien de crayons de combustible nucléaire.

On connaît de FR-2 670 947 une installation du type précité qui permet de souder des grilles munies de languettes de soudage en saillie depuis les faces supérieures des grilles. Les moyens de déplacement de l'installation de soudage comprennent une caisse support mobile transversalement par rapport aux tubes guides, un bras extensible verticalement, et un poignet orientable qui porte une pince de soudage. Le poignet orientable offre des possibilités de rotation autour de trois axes distincts, de sorte que la pince de soudage présente un total de six degrés de liberté. L'installation décrite ci-dessus permet d'atteindre des cadences élevées de soudage, mais il est encore souhaitable d'augmenter ces cadences.

On connaît également de US-4 587 394 une installation de soudage comprenant quatre outils de soudage qui évoluent simultanément pour participer chacun au soudage des grilles sur les tubes guides d'un même squelette. Chaque outil est relié à un chariot déplaçable longitudinalement par rapport aux tubes guides par des moyens de déplacement présentant trois degrés de liberté. Bien que les quatre outils de soudage évoluent simultanément, les cadences atteintes par une telle installation de soudage s'avèrent également trop faibles.

Un but de l'invention est de résoudre ce problème en fournissant une installation du type précité qui permette d'atteindre des cadences de soudage plus importantes.

A cet effet, l'invention a pour objet une installation de soudage selon la revendication 1.

Selon des modes particuliers de réalisation, l'installation peut comprendre l'une ou plusieurs des caractéristiques des revendications 2 à 11.

L'invention a également pour objet un procédé de soudage d'un squelette d'assemblage de combustible nucléaire selon les revendications 12 et 13.

L'invention a en outre pour objet un procédé de réalisation d'un assemblage de combustible nucléaire selon la revendication 14.

L'invention sera mieux comprise à la lecture de la description qui va suivre, donnée uniquement à titre d'exemple, et faite en se référant aux dessins annexés, sur lesquels :
- la figure 1 est une vue schématique en perspective montrant une installation de soudage suivant l'invention, les bâtis de réception de squelettes n'ayant pas été représentés,
- la figure 2 est une vue schématique de face de l'installation de la figure 1, prise suivant la direction de la flèche II de la figure 1,
- la figure 3 est une vue schématique, partielle et en perspective, illustrant une partie du squelette d'un assemblage de combustible nucléaire qui peut être soudé par l'installation de la figure 1,
- les figures 4 et 5 sont des vues schématiques, partielles et en perspective, illustrant les moyens de déplacement de l'outil de soudage de l'installation des figures 1 et 2, et
- la figure 6 est une vue schématique, partielle et en perspective illustrant une installation de soudage suivant un autre mode de réalisation.

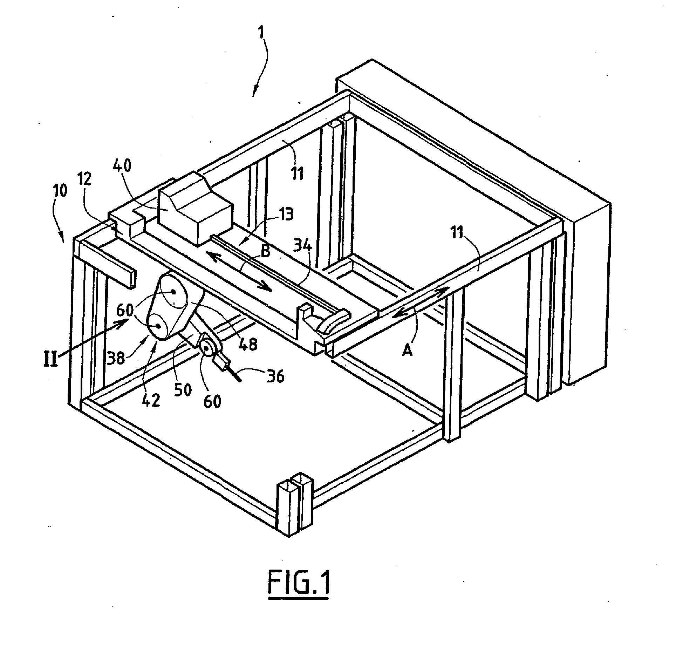

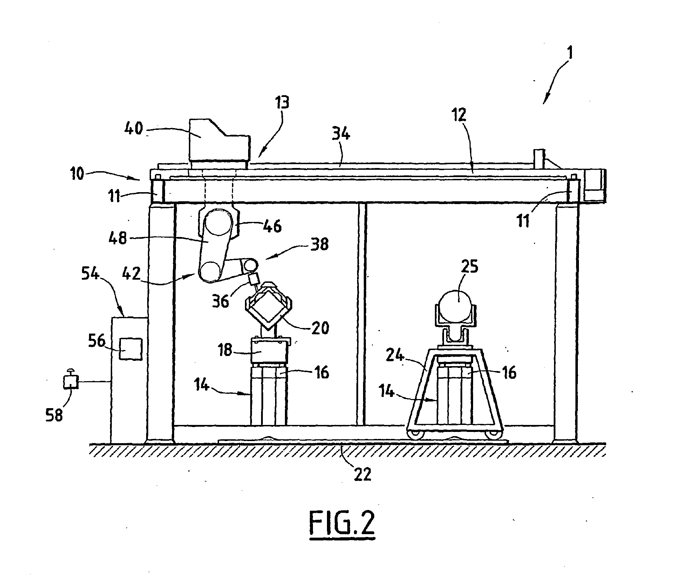

Les figures 1 et 2 illustrent schématiquement une installation 1 de soudage d'éléments de structure sur des tubes guides de squelettes d'assemblages de combustible nucléaire.

Plus précisément, les éléments de structure considérés par la suite sont des grilles de maintien de crayons de combustible nucléaire, même si d'autres éléments de structures, tels que des manchons, peuvent également être soudés par l'installation 1.

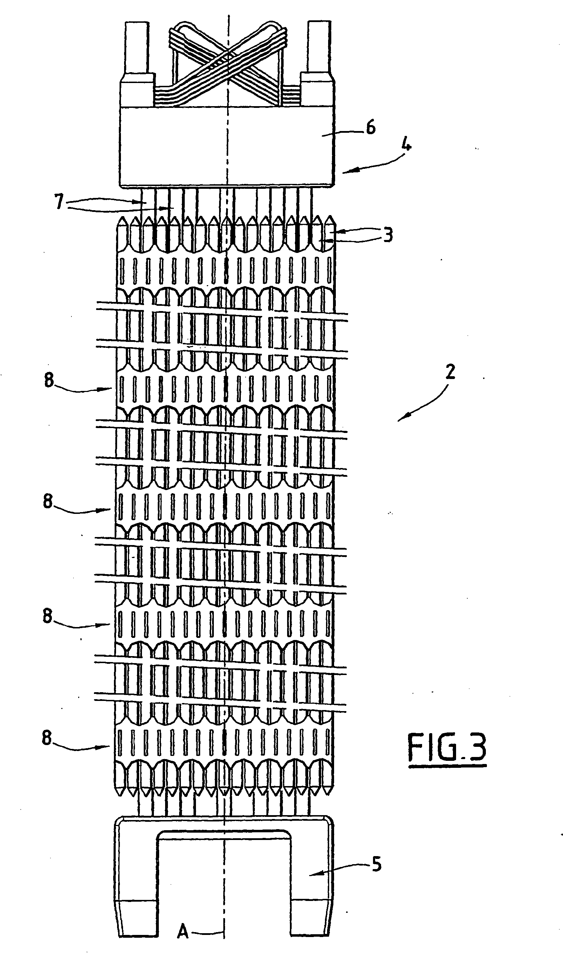

On rappelle, par référence à la figure 3, que l'assemblage 2 comprend principalement des crayons 3 de combustible nucléaire et une structure ou squelette 4, de support de crayons 3.

Le squelette de support 4 comprend classiquement :
- un embout inférieur 5 et un embout supérieur 6 disposés aux extrémités longitudinales de l'assemblage 1,
- des tubes guides 7 destinés à recevoir les crayons d'une grappe non-représentée de commande et d'arrêt du réacteur nucléaire, et
- des grilles 8 de maintien des crayons 3.

Les embouts 5 et 6 sont fixés aux extrémités longitudinales des tubes guides 7.

Les crayons 3 s'étendent verticalement entre les embouts 5 et 6. Les crayons 3 sont disposés aux noeuds d'un réseau sensiblement régulier à base carrée où ils sont maintenus par les grilles 8. Certains des noeuds du réseau sont occupés par les tubes guides 7 et éventuellement par un tube central d'instrumentation.

Les grilles 8 comprennent classiquement des jeux de plaquettes entrecroisées qui délimitent entre elles des cellules centrées sur les noeuds du réseau régulier. La plupart des cellules sont destinées à recevoir un crayon de combustible 3. Les autres reçoivent chacune un tube guide 7 et la cellule centrale reçoit éventuellement le tube d'instrumentation 14.

Habituellement, les grilles 8 sont munies de pattes de soudage qui font saillie vers le haut et qui permettent le soudage des grilles 8 sur les tubes guides 7. Il existe également des grilles dépourvues de telles pattes, comme illustré par US-4 849 161. Les plaquettes doubles de la grille de ce document présentent alors des dégagements supérieurs délimitant des zones de soudage de la grille sur les tubes guides 7.

L'installation 1 des figures 1 et 2 comprend, comme celle du document FR-2 670 947, un banc de montage 10 pouvant être couvert latéralement par des panneaux de protection. Ce banc 10 est un portique métallique comprenant des montants et deux rails 11 longitudinaux et horizontaux de circulation d'un chariot 12 portant un robot de soudage 13.

Le banc 10 délimite deux zones de travail parallèles (figure 2), de longueur au moins égale à celle d'un squelette 4 à souder, et disposées côte à côte. Dans chacune des zones est placé un bâti 14 permettant d'y pré-assembler un squelette 4. Chaque bâti 14 s'étend parallèlement aux rails 11 et peut comporter une table 16 mécano-soudée et un marbre 18.

Comme illustré par la figure 2, le banc 10 comporte encore des rails 22 disposés transversalement aux rails 11 et permettant de faire circuler une cage 24 entre la position où elle est représentée en figure 2, et où elle se trouve en face de l'un des bâtis 14, et une autre position, où elle se trouve face à l'autre bâti 14. Cette cage 24 est munie de rails longitudinaux de circulation d'un chariot 25 de positionnement de mandrins expansibles destinés à être insérés dans les tubes guides 7 aux emplacements de soudage afin d'éviter la déformation de ces tubes. Ces mandrins peuvent avoir la constitution déjà décrite dans le document FR-A-2 533 353 et être guidés par des cadres portés par la cage (non représentés).

Le marbre 18, qui s'étend sur toute la longueur du bâti 14, est prévu pour recevoir, en des emplacements ajustables, des cadres 20 de positionnement et de maintien des grilles 8 du squelette à souder. Ces cadres 20, munis de moyens permettant de les ouvrir pour insérer une grille 8 et de les refermer, peuvent avoir une constitution connue. Dans le cas illustré, ces cadres 20, destinés à recevoir les grilles 8 d'un squelette 4, ont leurs diagonales orientées horizontalement et verticalement.

Le chariot 12 occupe toute la largeur du banc d'assemblage et porte au moins un rail transversal 34.

Le robot de soudage 13 comprend une pince 36 de soudage par résistance et des moyens 38 de déplacement de la pince de soudage 36, qui relient la pince 36 au chariot 12.

Les moyens 38 de déplacement comprennent :
- une caisse support 40 mobile transversalement sur le ou les rail(s) 34,
- un bras articulé 42 prolongeant la caisse support 40 vers le bas, et
- un poignet orientable 44 prolongeant le bras 42 et portant la pince de soudage 36.

La caisse support 40 peut contenir le transformateur de soudage pour alimenter la pince de soudage 36 en énergie électrique.

Grâce au chariot 12, il est possible de déplacer la pince de soudage 36 par rapport au banc 10 en translation suivant la direction x comme matérialisé par la double flèche A sur la figure 1, c'est-à-dire parallèlement aux tubes guides 7 d'un squelette disposé sur un bâti 14. Grâce à la caisse support 40, il est également possible de déplacer la pince 36 en translation le long de la direction y, c'est-à-dire transversalement aux tubes guides 7, comme matérialisé par la double flèche B sur la figure 1.

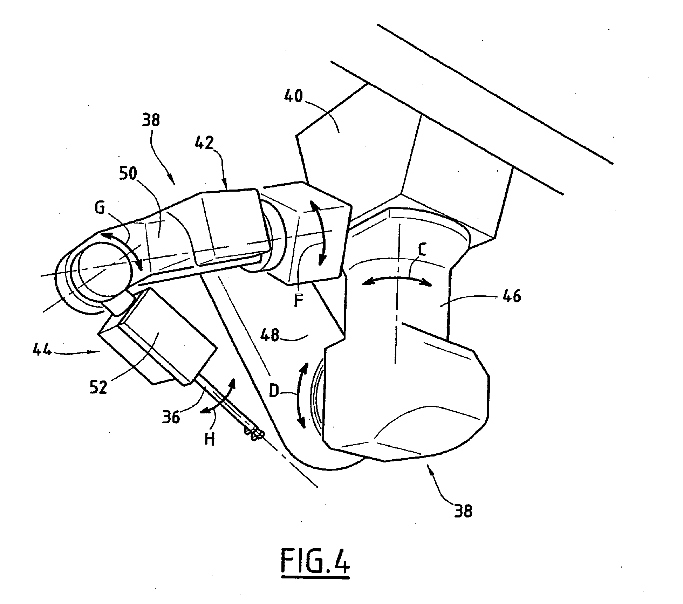

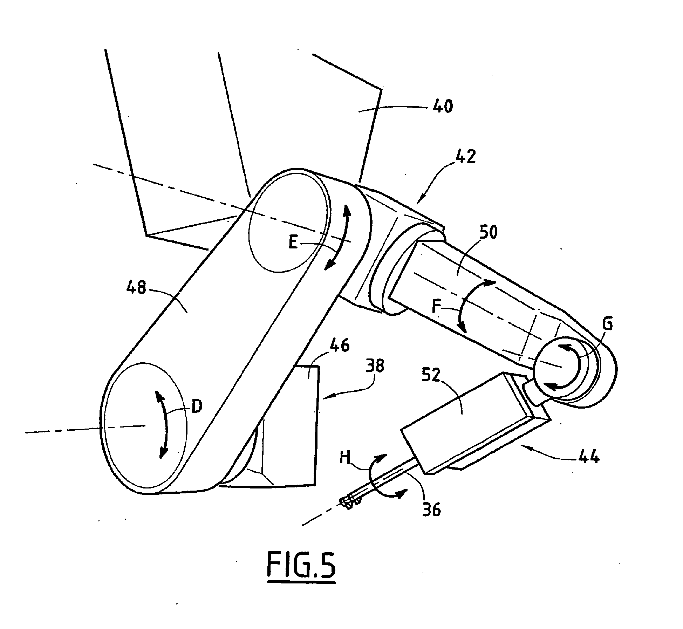

Comme illustré par les figures 4 et 5, le bras 42 comprend trois tronçons successifs 46, 48 et 50. Le premier tronçon 46 prolonge la caisse support 40 vers le bas. Le deuxième tronçon 48 est articulé au premier tronçon 46 par une double liaison rotative permettant une rotation relative autour d'un axe vertical, comme matérialisé par la double flèche C sur la figure 4, et une rotation relative autour d'un axe horizontal, comme matérialisé par la double flèche D sur les figures 4 et 5.

Le troisième tronçon 50 est articulé au deuxième tronçon 48 du bras 42 par une double liaison rotative permettant une rotation relative autour d'un axe horizontal, comme matérialisé par la double flèche E sur la figure 5, et une rotation relative autour de l'axe longitudinal du troisième tronçon 50, comme matérialisé par la double flèche F sur les figures 4 et 5.

Le poignet 44 porte le coffret 52 de la pince de soudage 36. Ce coffret 52 est muni des moyens habituels d'alimentation en énergie électrique et pneumatique, constitués par des câbles. Le poignet 44 est lié au troisième tronçon 50 du bras 42 par une double liaison rotative permettant une rotation relative autour d'un axe orthogonal à l'axe longitudinal du troisième tronçon 50, comme matérialisé par la double flèche G sur les figures 4 et 5, et une rotation autour de l'axe longitudinal de la pince 36, comme matérialisé par la double flèche H sur les figures 4 et 5.

Ainsi, la pince de soudage 36 présente huit degrés de liberté, matérialisés par les flèches A à H, les moyens 38 de déplacement en procurant sept.

Comme illustré par la figure 2, l'installation 1 comprend en outre des moyens programmables 54 de commande du déplacement et du fonctionnement de la pince 36. Ces moyens 54 de commande comprennent par exemple un ordinateur comprenant un ou plusieurs processeurs, des moyens 56 de stockage de données, des moyens d'entrée et sortie et des moyens d'affichage non-représentés.

Les moyens d'entrée sortie comprennent par exemple une interface utilisateur, par exemple sous forme d'une manette 58, permettant de commander manuellement le déplacement et le fonctionnement de la pince de soudage 36.

Pour programmer les moyens 54 de commande, qui sont destinés ensuite à piloter automatiquement le fonctionnement de la pince de soudage 36, on peut, par exemple, procéder comme suit.

Un opérateur commande manuellement, grâce à la manette 58, le déplacement de la pince 36 jusqu'à un premier emplacement de soudage d'une première grille 8 sur un des tubes guides 7 d'un squelette 4 préassemblé sur un des bâtis 14, puis l'opérateur commande l'exécution d'une opération de soudage à cet emplacement. Les électrodes de la pince 36 viennent alors plaquer la zone correspondante 9 de la grille 8 sur le tube guide 7 considéré, en assurant ainsi un soudage par résistance. Les coordonnées de ce premier emplacement de soudage, par exemple fournies par des capteurs de position 60 présents dans les moyens 38 de déplacement, sont alors enregistrées dans les moyens 56 de stockage. Ces capteurs, classiques, ont été représentés très schématiquement sur la figure 1.

L'opérateur va ensuite poursuivre la séquence de soudage pour l'ensemble de la première grille 8 considérée, les moyens 56 de stockage enregistrant progressivement les différentes coordonnées des emplacements auxquels des soudages sont effectués ainsi que les positions de la pince 36 lors des ces soudages. Cette séquence de soudage à une grille 8 n'étant qu'une partie de la séquence complète de soudage du squelette 4, elle sera dénommée sous-séquence par la suite.

Ensuite, l'opérateur amène la pince 36 sur le premier emplacement de soudage d'une deuxième grille 8 sur les tubes guides 7 du squelette 4. Il peut alors déclencher l'exécution de la sous-séquence de soudage qu'il a précédemment exécutée manuellement pour la première grille 8 et enregistrée.

En procédant ainsi pour chacune des grilles 8, les moyens 56 de stockage ont enregistrés les données nécessaires à la réalisation de toutes les opérations de soudage qui doivent être effectuées pour toutes les grilles 8 présentes le long des tubes guides 7.

Cette séquence complète de soudage des grilles 8 d'un squelette 4 est alors mémorisée et pourra être exécutée automatiquement lorsque le même type de squelette 4 devra être soudé par l'installation, l'opérateur ayant alors seulement à positionner la pince 36 sur le premier emplacement de soudage de la première grille 8 et à déclencher l'exécution de l'ensemble de la séquence.

Il est également possible de stocker, par exemple de la manière décrite précédemment, dans les moyens 56 de stockage des séquences complètes de soudage pour différents types de squelettes.

Ce procédé de programmation, par enregistrement d'une séquence d'apprentissage effectuée sous commande manuelle, est très convivial et très rapide à mettre en oeuvre. Il est notamment moins fastidieux que les procédés de l'état de la technique qui nécessitaient de définir une par une toutes les coordonnées de toutes les positions de soudage. Toutefois, d'autres modes de programmation que celui décrit précédemment peuvent être utilisés avec l'installation 1. Inversement, ce mode de programmation par apprentissage peut être utilisé avec une installation 1 où le nombre de degrés de liberté de la pince 36 est quelconque, par exemple de six comme dans FR-2 670 977.

On notera également que les séquences complètes de soudage programmées peuvent comprendre des sous-séquences différentes pour certaines des grilles 8 ainsi qu'une sous-séquence de soudage des tubes 7 guides à un des embouts 5 et 6 ou à des éléments de liaison à un des embouts 5 et 6.

Du fait des nombreux degrés de liberté que présente la pince 36, il s'est avéré que les séquences de soudage pouvait être effectuées de manière beaucoup plus rapide que dans l'état de la technique. De manière surprenante, il vaut mieux en effet augmenter le nombre de degrés de liberté que de multiplier les outils de soudage.

Cela est dû au fait que des trajets plus courts peuvent être empruntés entre les différents emplacements de soudage.

En outre, du fait des degrés de liberté en rotation introduits, et notamment de la possibilité de rotation autour d'un axe horizontal, matérialisée par la double flèche D, la pince 36 peut se déplacer avec des vitesses très élevées, supérieures notamment à 13m/s.

En outre, du fait du grand nombre de degrés de liberté, la pince 36 peut atteindre des zones difficilement accessibles, et notamment les zones de soudage de grilles telles que celles de US-4 849 161. L'installation 1 peut donc assurer le soudage de tous les types de grilles 8 et notamment ceux ne présentant pas de patte de soudage.

De plus, la pince est capable d'appliquer des forces de soudage élevées, par exemple de l'ordre de 60daN, même dans des emplacements difficilement accessibles.

Comme dans FR-2 670 947, la présence de deux bancs 14 permet d'en utiliser un pour préassembler un squelette tandis que l'autre est utilisé pour souder, grâce à la pince 36, les éléments d'un squelette 4 qui a déjà été préassemblé. Grâce à ce fonctionnement en temps masqué, le robot de soudage 13 est utilisé de façon quasi-permanente.

Dans certaines variantes cependant, l'installation 1 peut ne comporter qu'un bâti 14.

De manière générale, les moyens 48 de déplacement peuvent présenter moins de degrés de liberté, par exemple uniquement sept.

De même, les degrés de liberté ne sont pas nécessairement ceux décrits précédemment. D'autres combinaisons de rotation(s) et de translation(s) que celles décrites peuvent notamment être envisagées.

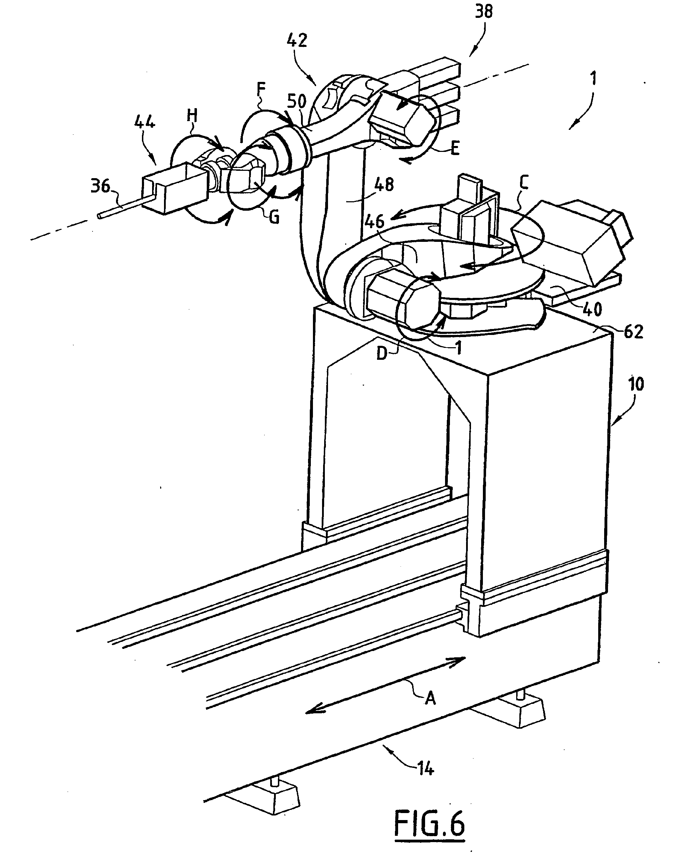

La figure 6 illustre un autre mode de réalisation d'une installation 1 de soudage qui se distingue principalement de celle décrite précédemment par ce qui suit.

Le portique 10 est monté coulissant sur le bâti 14 de réception d'un squelette à souder. La caisse support 40 est fixée sur l'âme supérieure 62 du portique 10 et ne présente donc pas de degré de liberté par rapport à celui-ci. La double flèche B du mode de réalisation précédent n'est donc pas visible sur la figure 6.

La liaison entre les tronçons 48 et 50 du bras 42 est une simple liaison rotative, matérialisée par la double flèche E. La liaison entre le tronçon 50 et le poignet 44 est une triple liaison rotative, matérialisée par les doubles flèches F à H.

Les moyens 38 de déplacement de l'outil 36 présentent donc six degrés de liberté, matérialisés par les flèches C à H.

Le montage du portique 10 sur le bâti 14 permet donc d'éliminer un degré de liberté, en l'occurrence celui matérialisé par la flèche B sur les figures précédentes.

En outre, le montage du portique 10 sur le bâti 14 permet d'améliorer le positionnement de l'outil 36 par rapport à un squelette à souder.

De manière générale, l'outil de soudage 36 peut mettre en oeuvre un autre type de soudage que le soudage par résistance.

## Revendications

1. Installation (1) de soudage d'éléments de structure (8) sur des tubes guides (7) d'un squelette d'assemblage de combustible nucléaire, l'installation comprenant :
- au moins un bâti (14) de réception et de maintien des tubes guides (8) et des éléments de structure (8),
- un chariot (12) déplaçable parallèlement aux tubes guides (7),
- au moins un outil de soudage (36), et
- des moyens (38) de déplacement de l'outil de soudage (36), les moyens (38) de déplacement reliant l'outil de soudage (36) au chariot (12),
**caractérisée en ce que** les moyens (38) de déplacement présentent au moins six degrés de liberté.

2. Installation selon la revendication 1, dans laquelle les moyens (38) de déplacement présentent au moins sept degrés de liberté.

3. Installation selon l'une des revendications précédentes, dans laquelle les moyens (38) de déplacement comprennent un bras (42) dont au moins deux tronçons (46, 48, 50) sont articulés l'un à l'autre, et dans laquelle les moyens (38) de déplacement comprennent en outre un poignet (44) qui porte l'outil de soudage (36), le poignet (44) prolongeant le bras (42) et étant articulé au bras (42) par une liaison présentant au moins deux degrés de liberté.

4. Installation selon la revendication 3, dans laquelle le poignet (44) est articulé au bras (42) par une liaison autorisant des rotations (G, H) autour d'au moins deux axes distincts.

5. Installation selon la revendication 3 ou 4, dans laquelle le bras (42) comprend au moins trois tronçons (46, 48, 50) articulés l'un à l'autre.

6. Installation selon l'une des revendications 3 à 5, dans laquelle au moins deux tronçons (46, 48, 50) du bras (42) sont articulés l'un à l'autre par une liaison autorisant des rotations (C, D, E, F) autour de deux axes distincts.

7. Installation selon l'une des revendications précédentes, dans laquelle les moyens (38) de déplacement comprennent une caisse support (40) mobile transversalement aux tubes guides (7).

8. Installation selon l'une des revendications précédentes, dans laquelle le chariot (12) est monté mobile sur le bâti (14).

9. Installation selon l'une des revendications précédentes, dans laquelle l'outil de soudage est une pince (36) de soudage par résistance.

10. Installation selon l'une des revendications précédentes, laquelle comprend des moyens programmables (54) de commande des moyens (38) de déplacement de l'outil de soudage (36), et des moyens manuels (58) de commande des moyens (38) de déplacement de l'outil de soudage (36).

11. Installation selon la revendication 10, dans laquelle les moyens (38) de déplacement comprennent des capteurs (60) de position.

12. Procédé de soudage d'un squelette (4) d'assemblage de combustible nucléaire, le squelette comprenant des tubes guides (7) et des éléments de structure (8) soudés sur les tubes guides (7), le procédé comprenant des étapes de soudage des éléments de structure (8) sur les tubes guides (7) au moyen d'une installation selon l'une des revendications 1 à 11.

13. Procédé de soudage selon la revendication 12, dans lequel l'installation est une installation selon les revendications 10 ou 11, et le procédé de soudage comprend la programmation de l'installation, laquelle programmation comprend les étapes de :
- commander manuellement les moyens (38) de déplacement pour que l'outil de soudage (36) exécute une séquence de soudage, et
- enregistrer la séquence de soudage dans les moyens programmables (54) de commande.

14. Procédé de réalisation d'un assemblage (2) de combustible nucléaire, l'assemblage comprenant des crayons (3) de combustible nucléaire et un squelette (4) de support de crayons (3), le squelette (4) comprenant des tubes guides (7) et des éléments de structure (8) soudés sur les tubes guides (7), lequel utilise un procédé de soudage de squelette (4) selon la revendication 12.

## Patentansprüche

1. Vorrichtung (1) zum Schweißen von Strukturelementen (8) auf Führungsrohre (7) von einem Kernbrennstoff-Montageskelett, die Vorrichtung aufweisend:
- mindestens ein Gestell (14) zum Aufnehmen und zum Halten von Führungsrohren (7) und von Strukturelementen (8),
- eine Laufkatze (12), welche parallel zu den Führungsrohren (7) bewegbar ist,
- mindestens ein Schweißwerkzeug (36), und
- Bewegungsmittel (38) des Schweißwerkzeugs (36), wobei die Bewegungsmittel (38) das Schweißwerkzeug (36) mit der Laufkatze (12) verbinden,
**dadurch gekennzeichnet, dass** die Bewegungsmittel (38) mindestens sechs Freiheitsgrade aufweisen.

2. Vorrichtung gemäß dem Anspruch 1, bei welcher die Bewegungsmittel (38) mindestens sieben Freiheitsgrade aufweisen.

3. Vorrichtung gemäß irgendeinem der vorhergehenden Ansprüche, bei welcher die Bewegungsmittel (38) einen Arm (42) aufweisen, von dem mindestens zwei Abschnitte (46, 48, 50) zueinander gelenkig sind, und bei welcher die Bewegungsmittel (38) außerdem ein Handgelenk (44) aufweisen, welches das Schweißwerkzeug (36) trägt, wobei das Handgelenk (44) den Arm (42) verlängert und am Arm (42) mittels einer Verbindung, welche mindestens zwei Freiheitsgrade aufweist, gelenkig ist.

4. Vorrichtung gemäß dem Anspruch 3, bei welcher das Handgelenk (44) am Arm (42) mittels einer Verbindung, welche Drehungen (G, H) um mindestens zwei verschiedene Achsen herum erlaubt, gelenkig ist.

5. Vorrichtung gemäß dem Anspruch 3 oder 4, bei welcher der Arm (42) mindestens drei zueinander gelenkige Abschnitte (46, 48, 50) aufweist.

6. Vorrichtung gemäß irgendeinem der Ansprüche 3 bis 5, bei welcher mindestens zwei Abschnitte (46, 48, 50) des Arms (42) zueinander mittels einer Verbindung, welche Drehungen (C, D, E, F) um zwei verschiedene Achsen herum erlaubt, gelenkig sind.

7. Vorrichtung gemäß irgendeinem der vorhergehenden Ansprüche, bei welcher die Bewegungsmittel (38) ein Trägergehäuse (40) aufweisen, welches quer zu den Führungsrohren (7) bewegbar ist.

8. Vorrichtung gemäß irgendeinem der vorhergehenden Ansprüche, bei welcher die Laufkatze (12) bewegbar auf dem Gestell (14) angebracht ist.

9. Vorrichtung gemäß irgendeinem der vorhergehenden Ansprüche, bei welcher das Schweißwerkzeug (36) eine Widerstands-Schweißzange ist.

10. Vorrichtung gemäß irgendeinem der vorhergehenden Ansprüche, welche programmierbare Mittel (54) zum Steuern der Bewegungsmittel (38) des Schweißwerkzeugs (36) und manuelle Mittel (58) zum Steuern der Bewegungsmittel (38) des Schweißwerkzeugs (36) aufweist.

11. Vorrichtung gemäß dem Anspruch 10, bei welcher die Bewegungsmittel (38) Positionsgeber (60) aufweisen.

12. Verfahren zum Schweißen von einem Kernbrennstoff - Montageskelett (4), wobei das Skelett Führungsrohre (7) und auf die Führungsrohre geschweißte Strukturelemente (8) aufweist, wobei das Verfahren Schritte zum Schweißen der Strukturelemente (8) auf die Führungsrohre (7) mittels einer Vorrichtung gemäß irgendeinem der Ansprüche 1 bis 11 aufweist.

13. Verfahren zum Schweißen gemäß dem Anspruch 12, bei welchem die Vorrichtung eine Vorrichtung gemäß den Ansprüchen 10 oder 11 ist und das Verfahren zum Schweißen das Programmieren der Vorrichtung aufweist, wobei die Programmierung die Schritte aufweist:
- manuelles Steuern der Bewegungsmittel (38) damit das Schweißwerkzeug (36) eine Schweißsequenz ausführt, und
- Speichern der Schweißsequenz in den programmierbaren Mittel (54) zum Steuern.

14. Verfahren zur Durchführung einer Montage (2) von Kernbrennstoff, wobei die Montage Kernbrennstoffstäbe (3) und ein Skelett (4) zum Stützen der Stäbe (3) umfasst, wobei das Skelett (4) Führungsrohre (7) und auf die Führungsrohre (7) geschweißte Strukturelemente (8) aufweist, welche ein Verfahren zum Schweißen des Skeletts (4) gemäß dem Anspruch 12 nutzt.

## Claims

1. Installation (1) for welding structural elements (8) to guide tubes (7) of a nuclear fuel assembly skeleton, the installation comprising:
- at least one framework (14) for receiving and holding the guide tubes (7) and structural elements (8),
- a carriage (12) displaceable parallel with the guide tubes (7),
- at least one welding tool (36) and
- means (38) for displacing the welding tool (36), the displacement means (38) connecting the welding tool (36) to the carriage (12),
**characterised in that** the displacement means (38) have at least six degrees of freedom.

2. Installation as claimed in claim 1, in which the displacement means (38) have at least seven degrees of freedom.

3. Installation as claimed in one of the preceding claims, in which the displacement means (38) comprise an arm (42), at least two segments (46, 48, 50) of which are articulatingly linked to one another, and in which the displacement means (38) further comprise a wrist (44) which carries the welding tool (36), the wrist (44) extending the arm (42) and being articulatingly linked to the arm (42) by a link having at least two degrees of freedom.

4. Installation as claimed in claim 3, in which the wrist (44) is articulatingly linked to the arm (42) by a link permitting rotations (G, H) about at least two separate axes.

5. Installation as claimed in claim 3 or 4, in which the arm (42) comprises at least three segments (46, 48, 50) articulatingly linked to one another.

6. Installation as claimed in one of claims 3 to 5, in which at least two segments (46, 48, 50) of the arm (42) are articulatingly linked to one another by a link permitting rotations (C, D, E, F) about two separate axes.

7. Installation as claimed in one of the preceding claims, in which the displacement means (38) comprise a support box (40) movable transversely to the guide tubes (7).

8. Installation as claimed in one of the preceding claims, in which the carriage (12) is mounted so as to be movable on the framework (14).

9. Installation as claimed in one of the preceding claims, in which the welding tool is a resistance welding pincer (36).

10. Installation as claimed in one of the preceding claims, which comprises programmable means (54) for controlling the displacement means (38) of the welding tool (36) and manual means (58) for controlling the displacement means (38) of the welding tool (36).

11. Installation as claimed in claim 10, in which the displacement means (38) have position sensors (60).

12. Method of welding a nuclear fuel assembly skeleton (4), the skeleton comprising guide tubes (7) and structural elements (8) welded to the guide tubes (7), the method comprising steps of welding the structural elements (8) to the guide tubes (7) by means of an installation as claimed in one of claims 1 to 11.

13. Welding method as claimed in claim 12, in which the installation is an installation as claimed in one of claims 10 or 11 and the welding method involves programming the installation, said programming comprises the steps of:
- manually controlling the displacement means (38) so that the welding tool (36) performs a welding sequence, and
- recording the welding sequence in the programmable control means (54).

14. Method of making a nuclear fuel assembly (2), the assembly comprising nuclear fuel rods (3) and a skeleton (4) for supporting the rods (3), the skeleton (4) comprising guide tubes (7) and structural elements (8) welded to the guide tubes (7), based on a method of welding a skeleton (4) as claimed in claim 12.
